(19) Europäisches Patentamt
European Patent Office
Office européen des brevets

(11) EP 3 660 064 A1

(12) # EUROPÄISCHE PATENTANMELDUNG

(43) Veröffentlichungstag:
**03.06.2020 Patentblatt 2020/23**

(21) Anmeldenummer: **18208789.0**

(22) Anmeldetag: **28.11.2018**

(51) Int Cl.:
***C08G 18/48*** *(2006.01)* ***C08G 18/76*** *(2006.01)*
***C08G 18/42*** *(2006.01)* ***C08G 79/04*** *(2006.01)*
***C09K 21/14*** *(2006.01)* ***C08K 5/521*** *(2006.01)*
***C08L 75/06*** *(2006.01)* ***C08L 75/08*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **LANXESS Deutschland GmbH**
**50569 Köln (DE)**

(72) Erfinder:
- **HANSEL, Herr Jan-Gerd**
**51469 Bergisch Gladbach (DE)**
- **TEBBE, Heiko**
**41539 Dormagen (DE)**

(54) **ZUBEREITUNGEN MIT VERBESSERTER WIRKSAMKEIT ALS FLAMMSCHUTZMITTEL**

(57) Die vorliegende Erfindung betrifft Zubereitungen mit verbesserter Wirksamkeit, deren Verwendung, sowie Polyurethane, die die erfindungsgemäßen Zubereitungen enthalten.



Printed by Jouve, 75001 PARIS (FR)

**Beschreibung**

Die vorliegende Erfindung betrifft Zubereitungen mit verbesserter Wirksamkeit als Flammschutzmittel, deren Verwendung, sowie Polyurethane, die die erfindungsgemäßen Flammschutzmittel-Zubereitungen enthalten.

Polyurethan-Kunststoffe werden in vielen Bereichen, wie Möbel, Matratzen, Transport, Elektro, Bau und technische Dämmung als Werkstoffe eingesetzt. Man unterscheidet massive Polyurethane, wie z. B. thermoplastische Polyurethane, von Polyurethanschaumstoffen. Polyurethanschaumstoffe sind poröse Materialien, die aus Polyisocyanaten hergestellt werden, indem diese in Gegenwart von Treibmitteln mit Polyolen umgesetzt werden und dabei einen Schaumstoff bilden, der durch eine duroplastische Polymerstruktur dauerhaft stabilisiert wird. Es sind viele verschiedene Typen von Polyisocyanaten und Polyolen bekannt, die es erlauben, durch die Wahl der Rohstoffe diverse Schaumstoffarten mit unterschiedlichen Eigenschaften herzustellen.

Zum Erreichen hoher Flammschutzanforderungen, wie sie für Materialien u. a. für die Automobil-, Bahn- und Flugzeuginnenausstattung sowie die Bauisolierung gefordert sind, müssen Polyurethane in der Regel mit Flammschutzmitteln ausgerüstet werden. Hierzu ist eine Vielzahl unterschiedlicher Flammschutzmittel bekannt, die während der Synthese oder der Verarbeitung des Polyurethans eingesetzt werden. Unter der Wirksamkeit eines Flammschutzmittels, die für kommerzielle Anwendungen ein entscheidendes Kriterium ist, wird im Rahmen der vorliegenden Erfindung die Menge Flammschutzmittel bezogen auf eine standardisierte Rezeptur verstanden, die notwendig ist, um einen definierten Brandtest zu bestehen.

Flammschutzmittel müssen neben der gewünschten Wirksamkeit etliche weitere Eigenschaften aufweisen, um erfolgreich eingesetzt werden zu können. Beispielsweise sollen sie mit verschiedenen, zur Herstellung von Polyurethanen eingesetzten Rohstofftypen verträglich sein und sich mit diesen zu fehlerfreien Endprodukten verarbeiten lassen. Zur Herstellung von Polyurethanen werden flüssige Rohstoffe bevorzugt, die eine einfache Logistik und gute Dosierbarkeit ermöglichen. In diesem Zusammenhang ist eine geeignete Viskosität, beispielsweise von 20 mPa·s bis 1000 mPa·s bei 23°C, besonders erwünscht.

Außerdem sollen die Rohstoffe zur Polyurethan-Herstellung im fertigen Polyurethan wenig Emissionen oder Fogging verursachen. Unter Emissionen versteht man unerwünschte, flüchtige Bestandteile, die aus Kunststoffartikeln unter Gebrauchsbedingungen frei gesetzt werden. Diese Erscheinung kann nach der Prüfvorschrift VDA 278 quantitativ beurteilt werden. Unter Fogging versteht man die unerwünschte Kondensation von verdampften flüchtigen Bestandteilen aus der Kraftfahrzeug-Innenausstattung an Glasscheiben, insbesondere an der Windschutzscheibe. Diese Erscheinung kann nach DIN 75 201 quantitativ beurteilt werden.

In zunehmendem Maße wird von Flammschutzmitteln weiterhin gefordert, dass sie eine möglichst geringe Gefährdung für Mensch und Umwelt darstellen. Als problematisch werden beispielsweise Organohalogenverbindungen oder Arylphosphate angesehen. Vor diesem Hintergrund werden in verbrauchernahen Anwendungen Flammschutzmittel bevorzugt, die auf halogenbasierte oder arylphosphathaltige Stoffe verzichten.

Unter den vielen Substanzen, die als Flammschutzmittel für Polyurethanschaumstoffe vorgeschlagen wurden, sind die Poly(alkylenphosphate) durch ein günstiges Eigenschaftsprofil gekennzeichnet. Als Poly(alkylenphosphat) wird im Allgemeinen eine Mischung von Substanzen der Formel (I)

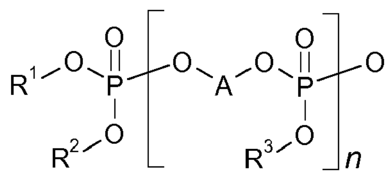

(I),

bezeichnet, in der $R^1$ bis $R^4$ für Alkylreste stehen, A für einen optional Heteroatome enthaltenden Alkylenrest steht und *n* für eine Zahl zwischen 0 und 100 steht. Entsprechend dieser Definition enthalten die im Zusammenhang mit der vorliegenden Erfindung stehenden Poly(alkylenphosphate) keine freien Hydroxylgruppen. Hydroxylgruppenhaltige Poly(alkylenphosphate) sind dem Fachmann ebenfalls bekannt, haben aber den Nachteil, dass sie aufgrund ihrer Reaktivität gegenüber Isocyanaten die empfindliche Chemie der Polyurethansynthese stören können und daher oft schwierig in der Verarbeitung sind.

Bei Poly(alkylenphosphaten) handelt es sich um Oligomere oder Polymere, die eine Molmassenverteilung aufweisen. Die Mischung von Substanzen der Formel (I) ist also dadurch gekennzeichnet, dass sie verschiedene individuelle Substanzen der Formel (I) enthält, die sich im Wesentlichen in der Anzahl *n* der Repetiereinheiten voneinander unterscheiden. Es ist daher zweckmäßig, ein Poly(alkylenphosphat) mit bestimmter Molmassenverteilung durch den gewichteten Mittelwert der Anzahl der Repetiereinheiten $\bar{n}$ zu charakterisieren. Aus $\bar{n}$ kann die zahlenmittlere Molmasse

$M_n$ des Poly(alkylen-phosphats) berechnet werden und umgekehrt (siehe Beispiele) Es gilt dabei folgende Formel:

$$\bar{n} = (M_n - M_E)/M_R$$

mit

$\bar{n}$ : gewichteter Mittelwert der Anzahl der Repetiereinheiten der in der Mischung enthaltenen Poly(alkylenphosphate) der Formel (I),

$M_n$: zahlenmittlere Molmasse in g/mol (siehe Beispiele, durch Gelpermeationschromatographie bestimmt),

$M_E$: Summe der Molmassen der Endgruppen in g/mol und

$M_R$: Molmasse der Repetiereinheit in g/mol.

Für die Anwendung als Flammschutzmittel in Polyurethanen geeignete Poly(alkylenphosphate) sind bekannt z. B. aus WO 2002079315 A1. Bevorzugt ist darin das durch die CAS-Nummer 184538-58-7 identifizierte Poly(alkylenphosphat) der Formel (I), in der $R^1$ bis $R^4$ für Ethylreste stehen, A für einen Ethylenrest steht, $\bar{n}$ für eine Zahl zwischen 2 und 20 steht und das keine monomeren (d.h. $n$ = 0) oder dimeren (d.h. $n$ = 1) Bestandteile enthält. Dieses Produkt wird unter dem Handelsnamen Fyrol® PNX vermarktet. Nachteilig an Fyrol® PNX ist, dass es sich zwar mit Polyether-Polyolen zu Polyurethanschaumstoffen verarbeiten lässt, es aber nicht mit Polyester-Polyolen verträglich ist. Weiterhin weist Fyrol® PNX eine hohe Viskosität von 1241 mPa·s bei 23 °C auf.

Aus EP 2 687 534 A1 bekannte Poly(alkylenphosphate) der Formel (I), in denen beispielsweise $R^1$ bis $R^4$ für Ethylreste stehen, A für einen 3-Oxa-1,5-pentylenrest steht und $\bar{n}$ für eine Zahl zwischen 1,10 und 2,00 steht, haben im Vergleich zu Fyrol® PNX eine niedrigere Viskosität und sind sowohl mit Polyether-Polyolen als auch mit Polyester-Polyolen verträglich.

Poly(alkylenphosphate) mit weiter verringerten Emissionen (siehe Beispiele) sind aus EP-A 3388479 bekannt. Allerdings weisen diese Produkte eine noch zu geringere Flammschutzwirksamkeit auf.

Mischungen aus Poly(alkylenphosphaten) und niedermolekularen, phosphorbasierten Flammschutzmitteln sind beispielsweise aus US 7,288,577 B1 und EP 2 848 640 A1 bekannt. Nachteilig an den dort beschriebenen Mischungen ist, dass die Flammschutzwirksamkeit der Mischungen in keinem Fall höher war als die der enthaltenen Poly(alkylenphosphate). Eine Verbesserung der Wirksamkeit der Flammschutzmittel im oben definierten Sinn ist also nicht vollumfänglich erreicht worden. Weiterhin sind Arylphosphate als Mischungskomponente aufgrund ökotoxikologischer Eigenschaften in manchen Anwendungen unerwünscht.

Neue Technologien stellen zunehmend Ansprüche an Flammschutzmittel, die die aus dem Stand der Technik bekannten Substanzen nicht mehr erfüllen können. So werden im Automobilbau immer mehr Kunststoffkomponenten verbaut, was eine steigende Brandlast mit sich bringt. Gleichzeitig werden Hochvoltsysteme und leistungsstarke Batterien eingesetzt, die bei Fehlfunktion gefährliche Zündquellen darstellen. Um den sich daraus ergebenden strengeren Brandschutzanforderungen gerecht zu werden, sind Flammschutzmittel gefragt, die nicht nur eine hohe Wirksamkeit bieten, sondern darüber hinaus die Kombination aus ökotoxikologischer Unbedenklichkeit, Emissionsarmut, leichter Handhabbarkeit und anwendungstechnischer Flexibilität.

Aufgabe der vorliegenden Erfindung war es daher, halogen- und arylphosphatfreie Flammschutzmittel für Polyurethane bereit zu stellen, die sich durch niedrige Emissionen, eine niedrige Viskosität und eine hohe Flammschutzwirksamkeit auszeichnen und eine gute Verträglichkeit sowohl mit Polyether- als auch mit Polyester-Polyolen aufweisen.

Diese Aufgabe wird gelöst durch Zubereitungen, die neben einer Mischung von Poly(alkylenphosphaten) bestimmte cyclische Phosphonsäureester enthalten.

Gegenstand der vorliegenden Erfindung sind daher Flammschutzmittel-Zubereitungen, dadurch gekennzeichnet, dass sie

i) eine Mischung , enthaltend Poly(alkylenphosphate) entsprechend der Formel (I)

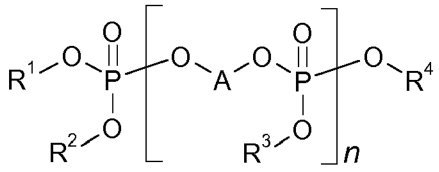

(I),

worin

$R^1$, $R^2$, $R^3$ und $R^4$ unabhängig voneinander jeweils für einen n-Butylrest oder einen 2-Methylpropylrest stehen,

A für einen Rest der Formel $-CHR^5-CHR^6-(O-CHR^7-CHR^8)_a-$ steht,
worin

a für eine ganze Zahl von 1 bis 5 steht und

$R^5$, $R^6$, $R^7$ und $R^8$ unabhängig voneinander für Wasserstoff oder Methyl stehen,
und

*n* für eine ganze Zahl von 0 bis 100, bevorzugt von 0 bis 50 und besonders bevorzugt von 0 bis 30 steht,

mit der Maßgabe, dass sich die in der Mischung enthaltenen Poly(alkylenphosphate) der Formel (I) zumindest in der Anzahl *n* der Repetiereinheiten voneinander unterscheiden, und

der gewichtete Mittelwert der Anzahl der Repetiereinheiten $\bar{n}$ der Poly-(alkylenphosphate) der Formel (I) im Bereich 1,10 bis 4,00 beträgt,
und

ii) mindestens einen cyclischen Phosphonsäureester der Formel (II)

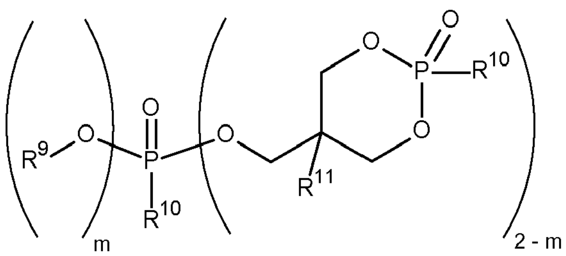

(II)

worin

$R^9$, $R^{10}$ und $R^{11}$ unabhängig voneinander jeweils für einen geradkettigen oder verzweigten $C_1$- bis $C_4$-Alkylrest stehen und m für die Zahl 0 oder 1 steht,

enthält.

Bevorzugt handelt es sich bei den in den erfindungsgemäßen Zubereitungen enthaltenen Poly(alkylenphosphaten) der Formel (I) um solche, worin a für die Zahl 1 steht.
Ebenfalls bevorzugt handelt es sich bei den in den erfindungsgemäßen Zubereitungen enthaltenen Poly(alkylenphosphaten) der Formel (I) um solche, worin die Reste $R^5$, $R^6$, $R^7$ und $R^8$ alle gleich sind und für Wasserstoff stehen.
Ebenfalls bevorzugt handelt es sich bei den in den erfindungsgemäßen Zubereitungen enthaltenen Poly(alkylenphosphaten) der Formel (I) um solche, worin die Reste $R^1$, $R^2$, $R^3$ und $R^4$ alle gleich sind und für n-Butylreste stehen. In einer alternativen, ebenfalls bevorzugten Ausführungsform der Erfindung sind die Reste $R^1$, $R^2$, $R^3$ und $R^4$ alle gleich und stehen für 2-Methylpropylreste.
Bevorzugt weisen die in den erfindungsgemäßen Zubereitungen enthaltenen Poly(alkylenphosphate) der Formel (I) einen Mittelwert der Anzahl der Repetiereinheiten $\bar{n}$ auf, der im Bereich von 1,20 bis 3,00; besonders bevorzugt

im Bereich von 1,03 bis 2,60 und ganz besonders bevorzugt im Bereich von 1,30 bis 1,90 liegt.

Im Falle der vorliegenden Erfindung wird die zahlenmittlere Molmasse $M_n$ der in der erfindungsgemäßen Zubereitungen enthaltenen Poly(alkylenphosphate) der Formel (I) durch Gelpermeationschromatographie mit Tetrahydrofuran als Elutionsmittel gegen Polystyrolstandards bestimmt. Diese Methode ist dem Fachmann bekannt, beispielsweise aus DIN 55672-1:2007-08. Aus $M_n$ lässt sich unter Berücksichtigung der Stöchiometrie der Formel (I) der gewichtete Mittelwert der Anzahl der Repetiereinheiten $\bar{n}$ der in der Mischung enthaltenen Poly(alkylenphosphate) leicht berechnen (siehe Beispiele).

Ganz besonders bevorzugt sind Zubereitungen enthaltend Poly(alkylenphosphate) der Formel (I), worin
a für die Zahl 1 steht,
$R^5$, $R^6$, $R^7$ und $R^8$ alle gleich sind und für Wasserstoff stehen
und
*n* für eine ganze Zahl von 0 bis 100, bevorzugt von 0 bis 50 und besonders bevorzugt von 0 bis 30 steht,
mit der Maßgabe, dass sich die in der Mischung enthaltenen Poly(alkylenphosphate) der Formel (I) zumindest in der Anzahl *n* der Repetiereinheiten voneinander unterscheiden, und
der gewichtete Mittelwert der Anzahl der Repetiereinheiten $\bar{n}$ der Poly(alkylenphosphate) der Formel (I) im Bereich von 1,10 bis 4,00, bevorzugt von 1,20 bis 3,00, besonders bevorzugt von 1,30 bis 2,60 und ganz besonders bevorzugt von 1,30 bis 1,90 liegt.

Ebenfalls ganz besonders bevorzugt sind Zubereitungen enthaltend Poly(alkylenphosphate) der Formel (I), worin
a für die Zahl 1 steht,
$R^1$, $R^2$, $R^3$ und $R^4$ alle gleich sind und für n-Butylreste stehen,
$R^5$, $R^6$, $R^7$ und $R^8$ alle gleich sind und für Wasserstoff stehen,
und
*n* für eine ganze Zahl von 0 bis 100, bevorzugt von 0 bis 50 und besonders bevorzugt von 0 bis 30 steht,
mit der Maßgabe, dass die in der Zubereitung enthaltenen Poly(alkylenphosphate) der Formel (I) zumindest in der Anzahl *n* der Repetiereinheiten voneinander unterscheiden, und
der gewichtete Mittelwert der Anzahl der Repetiereinheiten $\bar{n}$ der Poly-(alkylenphosphate) der Formel (I) im Bereich von 1,10 bis 4,00, bevorzugt von 1,20 bis 3,00, besonders bevorzugt von 1,30 bis 2,60 und ganz besonders bevorzugt von 1,30 bis 1,90 liegt.

Ebenfalls ganz besonders bevorzugt sind Zubereitungen enthaltend Poly(alkylenphosphate) der Formel (I), worin
a für die Zahl 1 steht,
$R^1$, $R^2$, $R^3$ und $R^4$ alle gleich sind und für 2-Methylpropylreste stehen,
$R^5$, $R^6$, $R^7$ und $R^8$ alle gleich sind und für Wasserstoff stehen
und
*n* für eine ganze Zahl von 0 bis 100, bevorzugt von 0 bis 50 und besonders bevorzugt von 0 bis 30 steht,
mit der Maßgabe, dass sich die in der Zubereitung enthaltenen Poly(alkylenphosphate) der Formel (I) zumindest in der Anzahl *n* der Repetiereinheiten voneinander unterscheiden, und
der gewichtete Mittelwert der Anzahl der Repetiereinheiten $\bar{n}$ der Poly-(alkylenphosphate) der Formel (I) im Bereich von 1,10 bis 4,00, bevorzugt von 1,20 bis 3,00, besonders bevorzugt von 1,30 bis 2,60 und ganz besonders bevorzugt von 1,30 bis 1,90 liegt.

Die Mischung enthaltend Poly(alkylenphosphate) entsprechend der Formel (I) ist vorzugsweise dadurch charakterisiert, dass in ihrer Molmassenverteilung auch die dimeren Phosphorsäureester der Formel (I) (d.h. *n* = 1) enthalten sind. Bevorzugt beträgt der Flächenanteil der dimeren Phosphorsäureester der Formel (I) (d.h. *n* = 1) in der Molmassenverteilung von 10 % bis 70 % (Flächenprozent bestimmt durch Gelpermeationschromatographie mit Tetrahydrofuran als Elutionsmittel gegen Polystyrolstandards) in Anlehnung an die Methode aus DIN 55672-1:2007-08.

Die in den erfindungsgemäßen Zubereitungen enthaltenen Poly(alkylenphosphate) können prinzipiell hergestellt werden durch dem Fachmann bekannte Methoden zur Herstellung von Alkylphosphaten, beispielsweise wie sie in EP-A 2 687 534 beschrieben sind.

Bevorzugt sind in der erfindungsgemäßen Zubereitung cyclische Phosphonsäureester der Formel (II) enthalten, in denen $R^9$ für Methyl oder Ethyl steht. Besonders bevorzugt steht $R^9$ für Methyl.

Bevorzugt sind in der erfindungsgemäßen Zubereitung cyclische Phosphonsäureester der Formel (II) enthalten, in denen $R^{10}$ für Methyl oder Ethyl steht. Besonders bevorzugt steht $R^{10}$ für Methyl.

Bevorzugt sind in der erfindungsgemäßen Zubereitung cyclische Phosphonsäureester der Formel (II) enthalten, in denen $R^{11}$ für Methyl oder Ethyl steht. Besonders bevorzugt steht $R^{11}$ für Ethyl.

Bevorzugt sind in der erfindungsgemäßen Zubereitung mindestens zwei verschiedene cyclische Phosphonsäureester der Formel (II) enthalten. Besonders bevorzugt sind mindestens ein cyclischer Phosphonsäureester der

Formel (II) mit m = 0 und mindestens ein cyclischer Phosphonsäureester der Formel (II) mit m = 1 enthalten.

Die in den erfindungsgemäßen Zubereitungen enthaltenen cyclischen Phosphonsäureester der Formel (II) sind kommerziell erhältlich oder können nach bekannten Methoden hergestellt werden.

Vorzugsweise sind die erfindungsgemäßen Flammschutzmittel-Zubereitungen halogenfrei. Der Begriff "halogenfrei" im Sinne der vorliegenden Erfindung bedeutet, dass die Komponenten der Zubereitung die Elemente Fluor, Chlor, Brom und/oder Iod nicht enthalten und dass die Zubereitungen keine anderen Substanzen in einer Menge enthalten, die einen Gehalt an einem oder mehreren der Elementen Fluor, Chlor, Brom und Iod von größer als 5000 ppm bezogen auf die Zubereitung verursacht.

Bevorzugt enthält die erfindungsgemäße Flammschutzmittel-Zubereitung 60 bis 99,9 Gew.-%, der Mischung enthaltend Poly(alkylenphosphate) entsprechend der Formel (I) und 0,1 bis 40 Gew.-% an mindestens einem cyclischen Phosphonsäureester der Formel (II), bezogen auf die gesamte Zubereitung. Besonders bevorzugt enthält die erfindungsgemäße Phosphorsäureester-Zubereitung 70 bis 99 Gew.-%, Mischung enthaltend Poly(alkylenphosphate) und 1 bis 30 Gew.-% an mindestens einem cyclischen Phosphonsäureester der Formel (II), bezogen auf die gesamte Zubereitung.

Bevorzugt handelt es sich bei den erfindungsgemäßen Flammschutzmittel-Zubereitungen um bei 23 °C flüssige Stoffe. Bevorzugt weisen die erfindungsgemäßen Flammschutzmittel-Zubereitungen bei 23 °C eine Viskosität zwischen 20 und 1000 mPa·s auf. Besonders bevorzugt beträgt die Viskosität bei 23 °C von 20 bis 900 mPa·s.

Bevorzugt können die erfindungsgemäßen Flammschutzmittel-Zubereitungen neben der Mischung enthaltend Poly(alkylenphosphate) der Formel (I) und cyclische Phosphonsäureester der Formel (II) je nach Anwendungsgebiet ein oder mehrere Hilfsmittel, vorzugsweise aus der Gruppe der Lösungsmittel, Antioxidantien, Stabilisatoren und Farbstoffen, enthalten. Als solche Hilfsmittel kommen beispielsweise in Frage:

- Lösungsmittel, wie z. B. Alkylester aliphatischer oder aromatischer Di- oder Tricarbonsäuren,
- Antioxidantien und Stabilisatoren, wie z. B. sterisch gehinderte Trialkylphenole, Alkylester der 3-(3,5-Di-tert.-butyl-4-hydroxyphenyl)-propionsäure, Benzofuran-2-one, sekundäre aromatische Amine, Phosphite, Phenothiazine oder Tocopherole, und
- Farbstoffe, wie z. B. lösliche organische Farbstoffe, Eisenoxidpigmente oder Ruße.

Die erfindungsgemäßen Flammschutzmittel-Zubereitungen eignen sich zur Verwendung als Flammschutzmittel, vorzugsweise für Polyurethane. Weiterer Gegenstand der vorliegenden Erfindung ist die Verwendung der erfindungsgemäßen Flammschutzmittel-Zubereitungen als Flammschutzmittel in Polyurethanen.

Die Flammschutzmittel-Zubereitungen können in allen dem Fachmann bekannten Anwendungen für flammwidrige Polyurethane verwendet werden, insbesondere bevorzugt in duroplastischen Polyurethanen, Polyurethanschaumstoffen, Polyurethan-Elastomeren, thermoplastischen Polyurethanen, Polyurethan-Beschichtungen und -Lacken, Polyurethan-Klebstoffen und -Bindemitteln oder Polyurethan-Fasern. Bevorzugt werden die Zubereitungen in Polyurethanschaumstoffen verwendet. Besonders bevorzugt werden die Zubereitungen in Polyurethanweichschaumstoffen verwendet. Ganz besonders bevorzugt werden die Zubereitungen in Polyurethanweichschaumstoffen verwendet, welche aus Polyether-Polyolen hergestellt werden, d.h. für Polyether-Polyurethanweichschaumstoffe. In einer alternativen, ebenfalls ganz besonders bevorzugten Ausführungsform der Erfindung werden die Zubereitungen in Polyurethanweichschaumstoffen verwendet, welche aus Polyester-Polyolen hergestellt werden, d.h. für Polyester-Polyurethanweichschaumstoffe.

Gegenstand der vorliegenden Erfindung sind weiterhin auch Polyurethane, die mindestens eine erfindungsgemäße Flammschutzmittel-Zubereitung enthalten. Durch geeignete Wahl der Menge an enthaltenen Flammschutzmittel-Zubereitungen lassen sich diese Polyurethane flammwidrig herstellen.

Die erfindungsgemäßen flammwidrigen Polyurethane können hergestellt werden, indem man organische Polyisocyanate mit Verbindungen mit mindestens zwei gegenüber Isocyanaten reaktionsfähigen Wasserstoffatomen mit üblichen Treibmitteln, Stabilisatoren, Aktivatoren und/oder weiteren üblichen Hilfs- und Zusatzstoffen in Gegenwart von mindestens einer erfindungsgemäßen Flammschutzmittel-Zubereitung umsetzt. Die Verbindungen mit mindestens zwei gegenüber Isocyanaten reaktionsfähigen Wasserstoffatomen werden als Polyolkomponente bezeichnet.

Die erfindungsgemäßen Flammschutzmittel-Zubereitungen werden in einer Menge von 0,5 bis 30 Gewichtsteilen, bevorzugt 3 bis 25 Gewichtsteilen, bezogen auf 100 Gewichtsteile Polyolkomponente, eingesetzt.

Bei den Polyurethanen handelt es sich um Polymere auf Isocyanatbasis, die vorwiegend Urethan- und/oder Isocyanurat- und/oder Allophanat- und/oder Uretdion- und/oder Harnstoff- und/oder Carbodiimidgruppen aufweisen. Die Herstellung von Polymeren auf Isocyanatbasis ist an sich bekannt und z. B. in DE-OS 16 94 142, DE-OS 16 94 215 und DE-OS 17 20 768 sowie im Kunststoff-Handbuch Band VII, Polyurethane, herausgegeben von G. Oertel, Carl-Hanser-Verlag München, Wien 1993, beschrieben.

Bei den erfindungsgemäßen flammwidrigen Polyurethanen handelt es sich vorzugsweise um duroplastische Polyurethane, Polyisocyanurate, Polyurethanschaumstoffe, Polyurethan-Elastomere, thermoplastische Polyurethane, Polyurethan-Beschichtungen und Polyurethan-Lacke, Polyurethan-Klebstoffe und -Bindemittel oder Polyurethan-Fasern.

In einer bevorzugten Ausführungsform der Erfindung handelt es sich bei den erfindungsgemäßen flammwidrigen Polyurethanen um flammwidrige Polyurethanschaumstoffe.

Polyurethanschaumstoffe werden grob in weiche und harte Schaumstoffe unterschieden. Zwar können Weich- und Hartschaumstoffe grundsätzlich in etwa die gleiche Raumdichte und Zusammensetzung aufweisen, jedoch sind die Polyurethanweichschäume nur gering vernetzt und weisen bei Druckbelastung nur einen geringen Verformungswiderstand auf. Im Gegensatz dazu besteht die Struktur der Polyurethanhartschäume aus hoch vernetzten Einheiten und der Polyurethanhartschaum zeigt bei Druckbelastung einen sehr hohen Verformungswiderstand. Der typische Polyurethanhartschaum ist geschlossenzellig und weist nur eine niedrige Wärmeleitzahl auf. Primär wird bei der Herstellung von Polyurethanen, die über die Reaktion von Polyolen mit Isocyanaten abläuft, über die Struktur und Molmasse des Polyols sowie über die Reaktivität und Anzahl (Funktionalität) der im Polyol enthaltenen Hydroxylgruppen die spätere Schaumstruktur und seine Eigenschaften beeinflusst. Weitere Einzelheiten zu Hart- und Weichschaumstoffen, den zu ihrer Herstellung einsetzbaren Ausgangsstoffen sowie zu Verfahren zu ihrer Herstellung finden sich in Norbert Adam, Geza Avar, Herbert Blankenheim, Wolfgang Friederichs, Manfred Giersig, Eckehard Weigand, Michael Halfmann, Friedrich-Wilhelm Wittbecker, Donald-Richard Larimer, Udo Maier, Sven Meyer-Ahrens, Karl-Ludwig Noble und Hans-Georg Wussow: "Polyurethanes", Ullmann's Encyclopedia of Industrial Chemistry Release 2005, Electronic Release, 7th ed., chap. 7 ("Foams"), Wiley-VCH, Weinheim 2005.

Bevorzugt weisen die erfindungsgemäßen Polyurethanschaumstoffe Raumgewichte von 10 - 150 kg/m$^3$ auf. Besonders bevorzugt weisen sie Raumgewichte von 20 - 50 kg/m$^3$ auf.

Für die Herstellung der Schaumstoffe auf Isocyanatbasis werden folgende Ausgangskomponenten eingesetzt:

1) Aliphatische, cycloaliphatische, araliphatische, aromatische und heterocyclische Polyisocyanate (z.B. W. Siefken in Justus Liebigs Annalen der Chemie, 562, S. 75-136), beispielsweise solche der Formel $Q(NCO)_n$, in der n = 2 bis 4, vorzugsweise 2 bis 3, und Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen, bedeuten. Besonders bevorzugt werden in der Regel die technisch leicht zugänglichen Polyisocyanate, die sich vom 2,4- und/oder 2,6-Toluylendiisocyanat bzw. von 4,4'- und/oder 2,4'-Diphenylmethandiisocyanat ableiten.

2) Verbindungen mit mindestens zwei gegenüber Isocyanaten reaktionsfähigen Wasserstoffatomen mit einem Molekulargewicht von 400 bis 8.000 g/mol ("Polyolkomponente"). Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen. Soll der Polyurethanschaum ein Weichschaum sein, so werden bevorzugt Polyole mit Molmassen von 2.000 bis 8.000 g/mol und 2 bis 6 Hydroxylgruppen pro Molekül eingesetzt. Soll hingegen ein Hartschaum hergestellt werden, so werden bevorzugt hochverzweigte Polyole mit Molmassen von 400 bis 1.000 g/mol und 2 bis 8 Hydroxylgruppen pro Molekül eingesetzt. Bei den Polyolen handelt es sich um Polyether und Polyester sowie Polycarbonate und Polyesteramide, wie sie für die Herstellung von homogenen und von zellförmigen Polyurethanen an sich bekannt sind und wie sie etwa in der DE-OS 28 32 253 beschrieben werden. Die mindestens zwei Hydroxylgruppen aufweisenden Polyether und Polyester sind erfindungsgemäß bevorzugt.

Die erfindungsgemäßen Polyurethanschaumstoffe lassen sich also durch entsprechende, leicht dem Stand der Technik zu entnehmende Wahl der Ausgangsstoffe als Hart- oder Weichschaumstoffe herstellen.

Gegebenenfalls sind weitere Ausgangskomponenten Verbindungen mit mindestens zwei gegenüber Isocyanaten reaktionsfähigen Wasserstoffatomen und einem Molekulargewicht von 32 bis 399 g/mol. Auch in diesem Fall versteht man hierunter Hydroxylgruppen und/oder Aminogruppen und/oder Thiogruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4 gegenüber Isocyanaten reaktionsfähige Wasserstoffatome auf. Beispiele hierfür werden ebenfalls in der DE-OS 28 32 253 beschrieben.

3) Wasser und/oder leicht flüchtige organische Substanzen als Treibmittel, z.B. n-Pentan, i- Pentan, Cyclopentan, Aceton, halogenhaltige Alkane, wie Trichlormethan, Methylenchlorid oder Chlorfluoralkane, $CO_2$ und andere.

4) Gegebenenfalls werden Hilfs- und Zusatzmittel mitverwendet, wie Katalysatoren der an sich bekannten Art, z.B. mit Alkylgruppen substituierte Amine, Amidine und Guanidine, Organozinn-Verbindungen oder Organophosphor-Verbindungen, oberflächenaktive Zusatzstoffe, wie Emulgatoren und Schaumstabilisatoren, Reaktionsverzögerer, z. B. sauer reagierende Stoffe wie Salzsäure oder organische Säurehalogenide, ferner Zellregler der an sich bekannten Art, wie Paraffine oder Fettalkohole und Dimethylpolysiloxane sowie Pigmente oder Farbstoffe und weitere Flammschutzmittel, ferner Stabilisatoren gegen Alterungs- und Witterungseinflüsse, z.B. Epoxyverbindungen oder Carbodiimide, Kernverfärbungsinhibitoren, Weichmacher und fungistatisch und bakteriostatisch wirkende Substanzen sowie Füllstoffe, wie Bariumsulfat, Kieselgur, Ruß oder Schlämmkreide (DE-OS 27 32 292). Als Kernverfärbungsinhibitoren können insbesondere sterisch gehinderte Trialkylphenole, Alkylester der 3-(3,5-Di-tert.-butyl-4-hydroxyphenyl)-propionsäure, Benzofuran-2-one, sekundäre aromatische Amine, Phosphite, Phenothiazine oder Tocopherole enthalten sein.

Als weitere Flammschutzmittel können neben den erfindungsgemäßen Flammschutzmittel-Zubereitungen in den erfindungsgemäßen Polyurethanen noch folgende Verbindungen enthalten sein:

- organische Phosphorverbindungen, wie beispielsweise Triethylphosphat, Triphenylphosphat, Diphenylkresylphosphat, Trikresylphosphat, isopropylierte oder butylierte Arylphosphate, aromatische Bisphosphate, Neopentylglycol-bis(diphenylphosphat), chlorhaltige Phosphorsäureester wie z.B. Tris(chlorisopropyl)phosphat oder Tris(dichloropropyl)phosphat, Dimethylmethanphosphonat, Diethylethanphosphonat, Dimethylpropanphosphonat, Diethylphosphinsäure-Derivate und -Salze, andere oligomere Phosphate oder Phosphonate, Hydroxylgruppen-haltige Phosphorverbindungen, 5,5-Dimethyl-1,3,2-dioxaphosphorinan-2-oxid-Derivate, 9,10-Dihydro-9-oxa-10-phosphaphenanthren-10-oxid (DOPO) und seine Derivate,

- anorganische Phosphorverbindungen, wie beispielsweise Ammoniumphosphat, Ammoniumpolyphosphat, Melaminphosphat, Melaminpolyphosphat,

- Stickstoffverbindungen, wie beispielsweise Melamin, Melamincyanurat,

- Bromverbindungen, wie beispielsweise Alkylester einer Tetrabrombenzoesäure, bromhaltige Diole hergestellt aus Tetrabromphthalsäureanhydrid, bromhaltige Polyole, bromhaltige Diphenylether, oder

- anorganische Flammschutzmittel, wie beispielsweise Aluminiumhydroxid, Boehmit, Magnesiumhydroxid, Blähgraphit oder Tonmineralien.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, Carl-Hanser-Verlag, München, 1993, auf den Seiten 104 bis 123 beschrieben.

Weiterer Gegenstand der vorliegenden Erfindung ist ein Verfahren zur Herstellung von Polyurethanen durch Umsetzung von organischen Polyisocyanaten mit Verbindungen mit mindestens zwei gegenüber Isocyanaten reaktionsfähigen Wasserstoffatomen und üblichen Treibmitteln, Stabilisatoren, Katalysatoren, Aktivatoren und/oder weiteren üblichen Hilfs- und Zusatzstoffen bei 20 bis 80 °C, in dem in einer Menge von 0,5 bis 30 Gewichtsteilen bezogen auf 100 Gewichtsteile Polyolkomponente, mindestens eine erfindungsgemäße Phosphorsäureester-Zubereitung eingesetzt wird. Bevorzugt werden die Phosphorsäureester-Zubereitungen in einer Menge von 3 bis 25 Gewichtsteilen bezogen auf 100 Gewichtsteile Polyolkomponente eingesetzt.

Zur Durchführung des Verfahrens zur Herstellung von erfindungsgemäßen Polyurethanen werden die oben beschriebenen Reaktionskomponenten nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US 2,764,565 beschrieben werden. Einzelheiten über Verarbeitungseinrichtungen, die auch erfindungsgemäß in Frage kommen, werden im Kunststoff-Handbuch Band VII, Polyurethane, herausgegeben von G. Oertel, Carl-Hanser-Verlag, München, Wien 1993, auf den Seiten 139 bis 192 beschrieben.

Nach dem erfindungsgemäßen Verfahren lassen sich auch kalthärtende Schaumstoffe herstellen (GB-PS 11 62 517, DE-OS 21 53 086). Selbstverständlich können aber auch Schaumstoffe durch Blockverschäumung oder nach dem an sich bekannten Doppeltransportbandverfahren hergestellt werden. Polyisocyanuratschaumstoffe werden nach den hierfür bekannten Verfahren und Bedingungen hergestellt.

Das erfindungsgemäße Verfahren erlaubt die Herstellung von Polyurethanschaumstoffen als Hart- oder Weichschäume in kontinuierlicher oder diskontinuierlicher Herstellungsweise oder als geschäumte Formartikel. Bevorzugt ist

das erfindungsgemäße Verfahren bei der Herstellung von Weichschaumstoffen, die durch ein Blockverschäumungsverfahren hergestellt werden.

Die nach der Erfindung erhältlichen Polyurethane finden bevorzugt Anwendung in Möbelpolsterungen, Textileinlagen, Matratzen, Fahrzeugsitzen, Armlehnen, Bauelementen, Sitz- oder Armaturverkleidungen, Kabelummantelungen, Dichtungen, Beschichtungen, Lacken, Klebstoffen, Haftvermittlern oder Fasern.

Anhand der nachfolgenden Beispiele wird die Erfindung näher erläutert, ohne dass dadurch eine Einschränkung der Erfindung bewirkt werden soll.

## Beispiele

## Synthesebeispiele

### Allgemeine Synthesevorschrift für Mischungen enthaltend Poly(alkylenphosphate) entsprechend der Formel (I) gemäß EP-A 3388479 (Synthesebeispiele S1 bis S5)

Ein Reaktor mit Rührer, Tropftrichter, Rückflusskühler und Vakuumeinrichtung wurde mit der in Tabelle 1 angegebenen Menge (Gewichtsteile) Phosphoroxychlorid befüllt. Das Phosphoroxychlorid wurde auf 10 bis 20 °C temperiert. Bei einem Vakuum im Bereich von 500 bis 700 mbar wurde die in der Tabelle 1 angegebene Menge Diethylenglycol zugetropft. Nach Ende des Zutropfens wurde der Druck weiter bis auf schließlich 5 bis 15 mbar abgesenkt und die Temperatur auf einen Wert von 20 bis 30 °C angehoben. Ein nahezu farbloser, flüssiger Rückstand verblieb.

In einem weiteren Reaktor mit Rührer, Tropftrichter und Rückflusskühler wurde bei 20 bis 30°C die in Tabelle 1 angegebenen Menge 2-Methylpropanol bzw. n-Butanol vorgelegt und mit dem oben erhaltenen Rückstand versetzt. Die Mischung wurde weiter bei einer Temperatur im Bereich von 20 bis 30°C bis zum Abklingen der Reaktion gerührt, und dann durch Zugabe von Natronlauge neutralisiert. Es bildeten sich zwei klare flüssige Phasen. Diese wurden getrennt und die organische Phase durch Destillation von überschüssigem Reagenz befreit. Der Destillationsrückstand wurde mit Wasser gewaschen und schließlich wurde restliches Wasser destillativ entfernt. Als Rückstand verblieben die Mischungen in Form farbloser Flüssigkeiten.

### Synthesevorschrift für eine Mischung enthaltend Poly(alkylenphosphate) gemäß EP-A 2 687 534 (Synthesebeispiel S6)

Ein Reaktor mit Rührer, Tropftrichter, Rückflusskühler und Vakuumeinrichtung wurde mit der in Tabelle 1 angegebenen Menge (Gewichtsteile) Phosphoroxychlorid befüllt. Das Phosphoroxychlorid wurde auf eine Temperatur von 10 bis 20°C temperiert. Bei einem Vakuum im Bereich von 500 bis 700 mbar wurde die in der Tabelle 1 angegebene Menge Diethylenglycol zugetropft. Nach Ende des Zutropfens wurde der Druck weiter bis auf schließlich 5 bis 15 mbar abgesenkt und die Temperatur auf einen Wert von 20 bis 30°C angehoben. Ein nahezu farbloser, flüssiger Rückstand verblieb.

In einem weiteren Reaktor mit Rührer, Tropftrichter und Rückflusskühler wurde bei einer Temperatur im Bereich von 20 bis 30°C die in Tabelle 1 angegebenen Menge Ethanol vorgelegt und mit dem oben erhaltenen Rückstand versetzt. Die Mischung wurde weiter bei 20 bis 30°C bis zum Abklingen der Reaktion gerührt, und dann durch Zugabe von konzentrierter Natronlauge neutralisiert. Daraufhin wurde so viel Dichlormethan und Wasser zugefügt, dass zwei klare flüssige Phasen entstanden. Diese wurden getrennt und die organische Phase durch Destillation vom Dichlormethan, überschüssigem Ethanol und Wasser befreit. Als Rückstand verblieb die Oligomerenischung in Form einer farblosen Flüssigkeit.

### Bestimmung des gewichteten Mittelwerts der Anzahl der Repetiereinheiten $\overline{n}$ in den Mischungen S1 bis S6

Die in den Synthesebeispielen S1 bis S6 hergestellten Produkte erwiesen sich nach Analyse durch Gelpermeationschromatographie (GPC) als Mischungen. Die zahlenmittleren Molmassen $M_n$ der Mischungen wurden durch GPC mit Tetrahydrofuran als Elutionsmittel gegen Polystyrolstandards in Anlehnung an die Methode aus DIN 55672-1:2007-08 bestimmt. Der gewichtete Mittelwert der Anzahl der Repetiereinheiten $\overline{n}$ der in der Mischung enthaltenen Poly(alkylenphosphate) entsprechend der Formel (I) wurde aus der gemessenen zahlenmittleren Molmasse $M_n$ nach folgender Formel berechnet:

$$\overline{n} = (M_n - M_E)/M_R$$

mit

$\overline{n}$ : gewichteter Mittelwert der Anzahl der Repetiereinheiten der in der Mischung enthaltenen Poly(alkylenphosphate) der Formel (I),

$M_n$: zahlenmittlere Molmasse in g/mol durch Gelpermeationschromatographie in Anlehnung an die Methode aus DIN 55672-1:2007-08 bestimmt,

$M_E$: Summe der Molmassen der Endgruppen in g/mol und

$M_R$: Molmasse der Repetiereinheit in g/mol.

Für die Mischungen S1 bis S5 aus Poly(alkylenphosphaten) der Formel (I) mit $R^1 = R^2 = R^3 = R^4$ = n-Butyl oder 2-Methylpropyl und A = $-CH_2CH_2OCH_2CH_2-$ mit a = 1 gilt $M_E$ = 266,31 g/mol und $M_R$ = 224,19 g/mol. Für die nicht erfindungsgemäße Vergleichssubstanz S6 aus Poly(alkylenphosphaten) der Formel (I) mit $R^1 = R^2 = R^3 = R^4$ = Ethyl und A = $CH_2CH_2OCH_2CH_2-$ mit a = 1 gilt $M_E$ = 182,16 g/mol und $M_R$ = 194,14 g/mol. Die Ergebnisse sind in Tabelle 1 aufgelistet.

**Tabelle 1: Verwendete Rohstoffe (Gewichtsteile) zur Herstellung der Mischungen (Synthesebeispiele S1 bis S5) und der Vergleichssubstanz S6 und Ergebnisse der Gelpermeationschromatographie**

| Beispiel | S1 | S2 | S3 | S4 | S5 | S6 |
|---|---|---|---|---|---|---|
| Phosphoroxychlorid | 149,6 | 182,8 | 154,1 | 151,7 | 154,1 | 306,7 |
| Diethylenglycol | 74,0 | 68,3 | 62,7 | 66,3 | 62,7 | 118,7 |
| 2-Methylpropanol | 380,0 | 500,0 | 444,7 | 360,0 | | |
| n-Butanol | | | | | 444,7 | |
| Ethanol | | | | | | 618,2 |
| Flächenanteil des Dimeren (d.h. *n* = 1) | 27% | 66% | 53% | 41 % | 51 % | 43% |
| $M_n$ [g/mol] | 844 | 608 | 656 | 709 | 649 | 462 |
| $\overline{n}$ | 2,58 | 1,53 | 1,74 | 1,97 | 1,71 | 1,44 |

Außer den in Tabelle 1 aufgeführten Syntheseprodukten wurden zur Herstellung der Flammschutzmittel-Zubereitungen die folgenden Substanzen eingesetzt:

Fyrol® PNX: Handelsprodukt der ICL-IP Bitterfeld GmbH, Poly(alkylenphosphat) der Formel (I), in der R1 bis R4 für Ethylreste stehen, A für einen Ethylenrest steht, $\overline{n}$ für eine Zahl zwischen 2 und 20 steht und die keine monomeren (d.h. *n* = 0) oder dimeren (d.h. *n* = 1) Bestandteile enthält. Die Gelpermeationschromatographie unter den oben angegebenen Bedingungen ergab einen Flächenanteil des Dimeren (d.h. *n* = 1) von 2,4 %, eine Zahlenmittlere Molmasse $M_n$ von 640 g/mol und unter Berücksichtigung von $M_E$ = 182,16 g/mol und $M_R$ = 152,09 g/mol damit einen gewichteten Mittelwert der Anzahl der Repetiereinheiten $\overline{n}$ von 3,01.

Amgard® CU: Handelsprodukt der Lanxess Deutschland GmbH, Mischung cyclischer Phosphonsäureester der Formel (II) mit m = 0 und m = 1 und R9, R10 = Methyl und R11 = Ethyl.

## Herstellung der erfindungsgemäßen Flammschutzmittel-Zubereitungen

Die in Tabelle 2 gelisteten Komponenten wurden in den angegebenen Massenverhältnissen eingewogen und unter Stickstoffatmosphäre bei 25 °C mit einem mechanischen Rührwerk bei 300 $min^{-1}$ verrührt.

## Viskositäten der Komponenten und der Flammschutzmittel-Zubereitungen

Die Viskositäten der verwendeten Rohstoffe und der hergestellten Flammschutzmittel-Zubereitungen wurden mit einem handelsüblichen Kugelfall-Viskosimeter bei 23 °C bestimmt und sind in Tabelle 2 aufgelistet.

**Tabelle 2: Zusammensetzung der Flammschutzmittel-Zubereitungen und Viskositäten**

| Beispiel | Mischung (Art) | Mischung (Massenteile) | Amgard® CU (Massenteile) | Viskosität (mPa·s/23 °C) |
|---|---|---|---|---|
| V1 | S1 | 100 | 0 | 315 |
| V2 | S2 | 100 | 0 | 79 |
| V3 | S3 | 100 | 0 | 97 |
| V4 | S4 | 100 | 0 | 138 |
| V5 | S5 | 100 | 0 | 93 |
| V6 | S6 | 100 | 0 | 58 |
| V7 | Fyrol® PNX | 100 | 0 | 1.241 |
| V8 | keine | 0 | 100 | 302.270 |
| B1 | S1 | 75 | 25 | 968 |
| B2 | S2 | 75 | 25 | 298 |
| B3 | S3 | 75 | 25 | 350 |
| B4 | S4 | 75 | 25 | 462 |
| V10 | S6 | 75 | 25 | 350 |
| V9 | Fyrol® PNX | 75 | 25 | 3.473 |
| B1-B4 = erfindungsgemäße Beispiele | | | | |

**Auswertung der Ergebnisse der Gelpermeationschromatographie und der Viskositätsmessung**

Die Molmassenverteilung der zur Herstellung der Mischungen S1 bis S5 zeichnen sich durch einen Anteil am Dimeren, also dem Poly(alkylenphosphat) der Formel (I) mit *n* = 1, von 27 % bis 66 % aus. Das Vergleichsmaterial Fyrol PNX enthält dagegen nur 2,4 % Dimer.

Die Viskosität von Amgard® CU (Vergleichsbeispiel V8) ist mit 302.270 mPa·s (23°C) so hoch, dass eine Handhabung und Verarbeitung mit der zur Herstellung von Polyurethanen üblichen Gerätschaft auf erhebliche technische Probleme stößt. Die Viskositäten der erfindungsgemäßen Flammschutzmittel-Zubereitungen B1 bis B4 liegen alle im bevorzugten Bereich von 20 mPa·s bis 1000 mPa·s (23°C) und damit niedriger als die Viskosität von Fyrol PNX (Vergleichsbeispiel V7) und einer Flammschutzmittel-Zubereitungen aus Fyrol PNX und Amgard CU (Vergleichsbeispiel V9).

Die nicht erfindungsgemäße Mischung S6 (siehe Vergleichsbeispiel V6) sowie eine daraus hergestellte Mischung mit Amgard® CU (siehe Vergleichsbeispiel V10) zeichnen sich durch akzeptable Viskositäten aus. Allerdings verursacht S6 im Schaumstoff erhöhte Emissionen (siehe unten in Tabelle 4) und ist daher für den Zweck der vorliegenden Erfindung schlecht geeignet.

**Herstellung von Polyurethanweichschaumstoffen**

**Tabelle 3: Rohstoffe und Einsatzmengen zur Herstellung von Polyether-Polyurethanweichschaumstoffen**

| Komponente | Funktion | Beschreibung | Massenteile |
|---|---|---|---|
| A | Polyol | Arcol® 1105 (Covestro AG), Polyetherpolyol mit OHZ 56 mg KOH/g | 100 |
| B | Treibmittel | Wasser | 3,0 |
| C | Katalysator | Addocat 108® (LANXESS Deutschland GmbH), 70 %ige Lösung von Bis(2-dimethylaminoethyl)ether in Dipropylenglykol | 0,08 |
| D | Katalysator | Addocat® SO (LANXESS Deutschland GmbH), Zinn-II-2-ethylhexanoat | 0,16 |

(fortgesetzt)

| Komponente | Funktion | Beschreibung | Massenteile |
|---|---|---|---|
| E | Stabilisator | Tegostab® B 8232 (Evonik), Siliconstabilisator | 1,0 |
| F1 | Flammschutzmittel | Mischung V4 | siehe Tabelle 4 |
| F2 | Flammschutzmittel | Mischung V6 | siehe Tabelle 4 |
| F3 | Flammschutzmittel | Erfindungsgemäße Flammschutzmittel-Zubereitungen B4 | siehe Tabelle 4 |
| G | Diisocyanat | Desmodur® T 80 (Covestro AG), Toluylendiisocyanat, Isomerenmischung | 40,9 |
| OHZ = Hydroxylzahl gemäß DIN 53240 | | | |

**Herstellung von Polyether-Polyurethanweichschaumstoffen**

Die Rohstoffe zur Herstellung von Polyether-Polyurethanweichschaumstoffen und ihre Einsatzmengen sind in Tabelle 3 angegeben. Die Einsatzmengen der Flammschutzmittel wurden systematisch variiert, siehe unten. Die Rohstoffe mit Ausnahme des Diisocyanats (Komponente G) wurden zu einer homogenen Mischung verrührt. Dann wurde das Diisocyanat zugefügt und kurz intensiv untergerührt. Nach einer Startzeit von 15 - 20 s und einer Steigzeit von 170 - 200 s wurde ein Polyether-Polyurethanweichschaumstoff mit einem Raumgewicht von 33 kg/$m^3$ erhalten. Bei allen Versuchen wurden gleichmäßig feinporige Schaumstoffe erhalten.

**Bestimmung der Flammwidrigkeit**

Die Polyurethanweichschaumstoffe (Polyether und Polyester) wurden nach den Vorgaben des Federal Motor Vehicle Safety Standards FMVSS-302 getestet und den Brandklassen SE (selbsterlöschend), SE/NBR (selbsterlöschend/keine Brennrate), SE/BR (selbsterlöschend/mit Brennrate), BR (Brennrate) und RB (schnell brennend) zugeordnet. Die Brandversuche wurden für jede Rezeptur fünfmal durchgeführt.

In Abwesenheit eines Flammschutzmittels brennt der Polyurethanweichschaumstoff rasch ab (Brandklasse RB). Um die Wirksamkeit der Flammschutzmittel zu bestimmen, wurden Rezepturen mit steigenden Mengen an Flammschutzmittel (Massenteile pro 100 Teile Polyolkomponente, php) hergestellt und geprüft. Dann wurde die niedrigste Menge an Flammschutzmittel ermittelt, die in allen Wiederholungen die beste Brandklasse SE ermöglichte. Je geringer diese Menge ist, desto wirksamer ist das Flammschutzmittel. Die Ergebnisse sind in Tabelle 4 aufgelistet.

**Bestimmung der Emissionen**

Die Polyurethanweichschaumstoffe (Polyether und Polyester) wurden nach den Vorgaben des Prüfverfahrens VDA 278 auf Freisetzung von flüchtigen Bestandteilen getestet. Zur Bestimmung der Emissionen der Klasse VOC wird die Schaumstoffprobe für 30 min bei 90°C getempert. Die Bestimmung der Emissionen der Klasse FOG erfordert die Temperung der gleichen Schaumstoffprobe für weitere 60 min bei 120 °C. Die Ergebnisse sind in Tabelle 4 aufgelistet. Es wurden jeweils die Schaumstoffproben untersucht, die die in Tabelle 4 angegebenen Mengen Flammschutzmittel enthielten.

**Bestimmung des Fogging-Kondensats**

Das Foggingverhalten der Polyurethanweichschaumstoffe wurde gemäß DIN 75201 B untersucht. Die gemessenen Mengen an Fogging-Kondensat nach Lagerung von 16 h bei 100°C sind in Tabelle 4 wiedergegeben. Es wurden jeweils die Schaumstoffproben untersucht, die die in Tabelle 4 angegebenen Mengen Flammschutzmittel enthielten.

**Tabelle 4: Wirksamkeit, Emissionen und Fogging-Kondensat der Polyether-Polyurethanweichschaumstoffe.**

| Bei spiel | Flammschutzmittel | Wirksamkeit (Mindestmen ge für Brand klasse SE in php) | VOC nach VDA 278 (ppm) | FOG nach VDA 278 (ppm) | Fogging-Konden sat (mg) |
|---|---|---|---|---|---|
| V4 | Mischung S4 gemäß EP-A 3388479 | 6 | 23 | 157 | 0,38 |
| V6 | Mischung S6 gemäß EP-A 2 687 534 | 4 | 94 | 260 | 0,39 |
| B4 | Erfindungsgemäße Flammschutzmittel-Zubereitung B4 | 5 | 18 | 206 | 0,33 |

**Auswertung der Ergebnisse zu Polyether-Polyurethanweichschaumstoffen**

Die Mischung S4 gemäß EP-A 3388479 alleine (Vergleichsbeispiel V4) zeigt in den Polyether-Schaumstoffen die geringste Wirksamkeit, aber niedrige Emissions- und Foggingwerte. Die aus EP-A 2 687 534 bekannte Mischung S6 (Vergleichsbeispiel V6) ist besser wirksam, verursacht aber trotz niedrigerer Einsatzmenge deutlich höhere Emissionen im VDA-278-Test. Die erfindungsgemäße Flammschutzmittel-Zubereitung B4 ist besser wirksam als die in ihr enthaltene Mischung S4 alleine und zeigt niedrige Emissionen und weniger Fogging-Kondensat und weist somit das beste Eigenschaftsprofil auf.

**Tabelle 5: Rohstoffe und Einsatzmengen zur Herstellung von Polyester-Polyurethanweichschaumstoffen**

| Komponente | Funktion | Beschreibung | Massenteile |
|---|---|---|---|
| A | Polyol | Desmophen® 2200 B (Covestro AG), Polyesterpolyol mit OHZ 60 mg KOH/g | 100 |
| B | Treibmittel | Wasser | 4,0 |
| C | Katalysator | Niax® A-30 (Momentive), Bis-(dimethylaminoethyl)-ether | 0,25 |
| D | Katalysator | Addocat® 117 (LANXESS Deutschland GmbH), Tertiäres Amin | 0,25 |
| E | Stabilisator | Tegostab® B 8324 (Evonik), Siliconstabilisator | 1,0 |
| F1 | Flammschutzmittel | Fyrol® PNX | siehe Tabelle 6 |
| F2 | Flammschutzmittel | Flammschutzmittel-Zubereitung V9 | siehe Tabelle 6 |
| F3 | Flammschutzmittel | Mischung V4 | siehe Tabelle 6 |
| F5 | Flammschutzmittel | Erfindungsgemäße Flammschutzmittel-Zubereitungen B4 | siehe Tabelle 6 |
| G | Diisocyanat | Desmodur® T 80 (Covestro AG), Toluylendiisocyanat, Isomerenmischung | 24,1 |
| H | Diisocyanat | Desmodur® T 65 (Covestro AG), Toluylendiisocyanat, Isomerenmischung | 24,1 |
| OHZ = Hydroxylzahl gemäß DIN 53240 | | | |

**Herstellung von Polyester-Polyurethanweichschaumstoffen**

Die Rohstoffe zur Herstellung von Polyester-Polyurethanweichschaumstoffen und ihre Einsatzmengen sind in Tabelle 5 angegeben. Die Einsatzmengen der Flammschutzmittel wurden systematisch variiert, siehe oben. Die Rohstoffe mit Ausnahme der beiden Diisocyanate (Komponenten G und H) wurden zu einer homogenen Mischung verrührt. Dann wurden die beiden vorgemischten Diisocyanate zugefügt und kurz intensiv untergerührt. Nach einer Startzeit von

10 - 15 s und einer Steigzeit von 70 - 80 s wurde ein Polyester-Polyurethanweichschaumstoff mit einem Raumgewicht von 29 kg/m$^3$ erhalten. Die Schaumstruktur der Polyester-Polyurethanweichschaumstoffe hing von den verwendeten Flammschutzmitteln ab. Sie ist in Tabelle 6 als "gleichmäßig feinporig" ("gf") oder "ungleichmäßig grobporig" ("ug") protokolliert. Ein Vergleichsschaumstoff ohne Flammschutzmittel hatte eine gleichmäßig feinporige Schaumstruktur und brannte rasch ab (Brandklasse RB).

**Tabelle 6: Schaumstruktur und Wirksamkeit der Polyester-Polyurethanweichschaumstoffe.**

| Bei spiel | Flammschutzmittel | Schaumstruktur | Wirksamkeit (Mindestmen ge für Brand klasse BR in php) | Wirksamkeit (Mindestmen ge für Brand klasse SE in php) |
|---|---|---|---|---|
| V4 | Mischung S4 gemäß EP-A 3388479 | gf | 5 | 7 |
| B4 | Erfindungsgemäße Flammschutzmittel-Zubereitung B4 | gf | 4 | 7 |
| V7 | Fyrol® PNX | ug | - | - |
| V9 | Flammschutzmittel-Zubereitung V9 | ug | - | - |

**Auswertung der Ergebnisse zu Polyester-Polyurethanweichschaumstoffen**

Die Vergleichsbeispiele V7 und V9 zeigen, dass Flammschutzmittel auf Basis von Fyrol® PNX für die Herstellung von flammwidrigen Polyester-Polyurethanschaumstoffen nicht geeignet sind. Die hergestellten Schaumstoffe hatten eine ungleichmäßig grobporige Schaumstruktur und waren unbrauchbar.

Mit der Mischung S4 gemäß EP-A 3388479 (Vergleichsbeispiel V4) lässt sich hingegen die gewünschte gleichmäßig feinporige Schaumstruktur herstellen. Allerdings ist die Flammschutzwirksamkeit schlechter als bei der Mischung S6 gemäß EP-A 2 687 534 (Vergleichsbeispiel V6). Die erfindungsgemäße Flammschutzmittel-Zubereitung B4 ist ebenfalls gut mit dem Polyester-Polyol verträglich und weist eine leicht verbesserte Wirksamkeit gegenüber der Mischung S4 auf.

## Patentansprüche

**1.** Zubereitung **dadurch gekennzeichnet, dass** sie

i) eine Mischung , enthaltend Poly(alkylenphosphate) entsprechend der Formel (I)

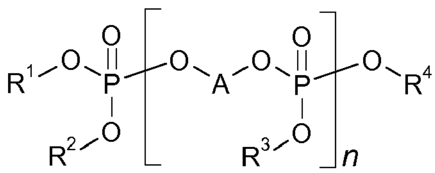

(I),

worin

$R^1$, $R^2$, $R^3$ und $R^4$ unabhängig voneinander jeweils für einen n-Butylrest oder einen 2-Methylpropylrest stehen,
A für einen Rest der Formel $-CHR^5-CHR^6-(O-CHR^7-CHR^8)_a-$ steht,
worin
a für eine ganze Zahl von 1 bis 5 steht und
$R^5$, $R^6$, $R^7$ und $R^8$ unabhängig voneinander für Wasserstoff oder Methyl stehen,
und
*n* für eine ganze Zahl von 0 bis 100, bevorzugt von 0 bis 50 und besonders bevorzugt von 0 bis 30 steht,

mit der Maßgabe, dass sich die in der Mischung enthaltenen Poly(alkylenphosphate) der Formel (I) zumindest in der Anzahl *n* der Repetiereinheiten voneinander unterscheiden, und der gewichtete Mittelwert der Anzahl der Repetiereinheiten $\bar{n}$ der Poly-(alkylenphosphate) der Formel (I) 1,10 bis 4,00 beträgt, und

ii) mindestens einen cyclischen Phosphonsäureester der Formel (II)

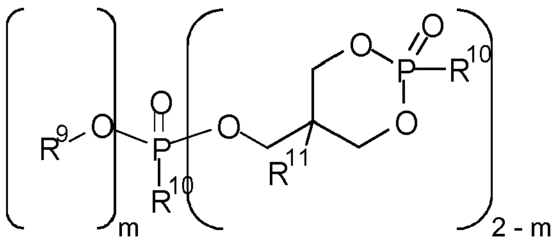
(II)

worin

$R^9$, $R^{10}$ und $R^{11}$ unabhängig voneinander jeweils für einen geradkettigen oder verzweigten $C_1$- bis $C_4$-Alkylrest stehen und
m für die Zahl 0 oder 1 steht,

enthält.

**2.** Zubereitungen gemäß Anspruch 1, **dadurch gekennzeichnet, dass** a für die Zahl 1 steht.

**3.** Zubereitungen gemäß Ansprüchen 1 und 2, **dadurch gekennzeichnet, dass** $R^5$, $R^6$, $R^7$ und $R^8$ alle gleich sind und für Wasserstoff stehen.

**4.** Zubereitungen gemäß einem der Ansprüche 1 bis 3, **dadurch gekennzeichnet, dass** $R^1$, $R^2$, $R^3$ und $R^4$ alle gleich sind und für n-Butylreste stehen.

**5.** Zubereitungen gemäß einem der Ansprüche 1 bis 3, **dadurch gekennzeichnet, dass** $R^1$, $R^2$, $R^3$ und $R^4$ alle gleich sind und für 2-Methylpropylreste stehen.

**6.** Zubereitungen gemäß einem der Ansprüche 1 bis 5, **dadurch gekennzeichnet, dass** der gewichtete Mittelwert der Anzahl der Repetiereinheiten $\bar{n}$ der Poly-(alkylenphosphate) der Formel (I) im Bereich von 1,20 bis 3,00, besonders bevorzugt im Bereich von 1,30 bis 2,60 und ganz besonders bevorzugt im Bereich von 1,30 bis 1,90 liegt.

**7.** Zubereitungen gemäß einem der Ansprüche 1 bis 6, **dadurch gekennzeichnet, dass** der Flächenanteil der dimeren Phosphorsäureesters der Formel (I) mit *n* = 1 in der Molmassenverteilung von 10 bis 70 Flächenprozent aufweist, bestimmt durch Gelpermeationschromatographie mit Tetrahydrofuran als Elutionsmittel gegen Polystyrolstandards.

**8.** Zubereitungen gemäß einem der Ansprüche 1 bis 6, **dadurch gekennzeichnet, dass** $R^9$, $R^{10}$ und $R^{11}$ unabhängig voneinander für Methyl oder Ethyl stehen.

**9.** Zubereitungen gemäß einem der Ansprüche 1 bis 8, **dadurch gekennzeichnet, dass** $R^9$ und $R^{10}$ beide für Methyl stehen und R11 für Ethyl steht.

**10.** Zubereitungen gemäß einem der Ansprüche 1 bis 9, **dadurch gekennzeichnet, dass** sie mindestens einen cyclischen Phosphonsäureester der Formel (II) mit m = 0 und mindestens einen cyclischen Phosphonsäureester der Formel (II) mit m = 1 enthalten.

**11.** Zubereitungen gemäß einem der Ansprüche 1 bis 10, **dadurch gekennzeichnet, dass** sie 60 bis 99,9 Gew.-% der Mischung enthaltend Poly(alkylenphosphate) der Formel (I) und 0,1 bis 40 Gew.-% an mindestens einem cyclischen Phosphonsäureester der Formel (II), bezogen auf die gesamte Zubereitung, enthalten.

12. Zubereitungen gemäß Anspruch 11, **dadurch gekennzeichnet, dass** sie 70 bis 99 Gew.-% derMischung enthaltend Poly(alkylenphosphate) der Formel (I) und 1 bis 30 Gew.-% an mindestens einem cyclischen Phosphonsäureester der Formel (II), bezogen auf die gesamte Zubereitung, enthalten.

13. Zubereitung gemäß einem der Ansprüche 1 bis 12, **dadurch gekennzeichnet, dass** es sich um Flüssigkeiten mit einer dynamischen Viskosität von 20 bis 1000 mPa·s bei 23 °C handelt.

14. Zubereitung gemäß einem der Ansprüche 1 bis 8, **dadurch gekennzeichnet, dass** sie ein oder mehrere Hilfsmittel ausgewählt aus der Gruppe der Lösungsmittel, Antioxidantien, Stabilisatoren und Farbstoffen enthält.

15. Zubereitungen gemäß einem der Ansprüche 1 bis 14, **dadurch gekennzeichnet, dass** sie neben der Mischung enthaltend Poly(alkylenphosphate) entsprechend der Formel (I) und dem mindestens einen cyclischen Phosphonsäureester der Formel (II) ein oder mehrere von den Poly(alkylenphosphaten) der Formel (I) und den cyclischen Phosphonsäureestern der Formel (II), verschiedene Flammschutzmittel und gegebenenfalls ein oder mehrere Hilfsmittel enthält.

16. Verwendung von Zubereitungen gemäß einem der Ansprüche 1 bis 15 als Flammschutzmittel.

17. Verwendung gemäß Anspruch 16, **dadurch gekennzeichnet, dass** die Zubereitungen als Flammschutzmittel für Polyurethane eingesetzt werden.

18. Verwendung gemäß Anspruch 17, **dadurch gekennzeichnet, dass** es sich bei den Polyurethanen um Schaumstoffe handelt, vorzugsweise um Polyurethanweichschaumstoffe basierend auf Polyether-Polyolen oder Polyester-Polyolen handelt.

19. Polyurethane enthaltend eine Zubereitung nach einem der Ansprüche 1 bis 15.

20. Polyurethane gemäß Anspruch 19 **dadurch gekennzeichnet, dass** es sich dabei um Polyurethanschaumstoffe handelt.

21. Polyurethanschaumstoffe gemäß Anspruch 19, **dadurch gekennzeichnet, dass** es sich dabei um Polyurethanweichschaumstoffe handelt, die aus Polyether-Polyolen oder Polyester-Polyolen hergestellt wurden.

22. Verfahren zur Herstellung von Polyurethanen gemäß Anspruch 19, **dadurch gekennzeichnet, dass** organische Polyisocyanate mit Verbindungen mit mindestens 2 gegenüber Isocyanaten reaktionsfähigen Wasserstoffatomen in Gegenwart von einer Zusammensetzung gemäß einem der Ansprüche 1 bis 14 und in Gegenwart von üblichen Treibmitteln, Stabilisatoren, Aktivatoren und/oder weiteren üblichen Hilfs- und Zusatzstoffen bei 20 bis 80 °C umgesetzt werden.

23. Verwendung der Polyurethane gemäß Anspruch 19 in Möbelpolsterungen, Textileinlagen, Matratzen, Fahrzeugsitzen, Armlehnen, Bauelementen, Sitz- oder Armaturverkleidungen, Dachhimmeln, Kabelummantelungen, Dichtungen, Beschichtungen, Lacken, Klebstoffen, Haftvermittlern oder Fasern.

Europäisches Patentamt
European Patent Office
Office européen des brevets

# EUROPÄISCHER RECHERCHENBERICHT

Nummer der Anmeldung
EP 18 20 8789

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | EP 3 388 479 A1 (LANXESS DEUTSCHLAND GMBH [DE]) 17. Oktober 2018 (2018-10-17)<br>* Anspruch 1; Tabelle 1 *<br>----- | 1-23 | INV.<br>C08G18/48<br>C08G18/76<br>C08G18/42<br>C08G79/04<br>C09K21/14<br>C08K5/521<br>C08L75/06<br>C08L75/08 |
| A | EP 0 771 810 A1 (HOECHST AG [DE])<br>7. Mai 1997 (1997-05-07)<br>* Beispiel 5 *<br>----- | 1-23 | |
| A | WO 2007/118089 A1 (ALBEMARLE CORP [US]; MACK ARTHUR G [US]; CHEW HOOVER B [US])<br>18. Oktober 2007 (2007-10-18)<br>* Absatz [0035] *<br>----- | 1-23 | |
| A | US 7 772 303 B2 (CHEIL IND INC [KR])<br>10. August 2010 (2010-08-10)<br>* Beispiel 4 *<br>----- | 1-23 | |

RECHERCHIERTE SACHGEBIETE (IPC)

C08G
G02F
C09J
C08K
C09K
C08L

Der vorliegende Recherchenbericht wurde für alle Patentansprüche erstellt

1

| Recherchenort | Abschlußdatum der Recherche | Prüfer |
|---|---|---|
| München | 24. April 2019 | Lanz, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 18 20 8789

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-04-2019

| Im Recherchenbericht angeführtes Patentdokument | Datum der Veröffentlichung | Mitglied(er) der Patentfamilie | Datum der Veröffentlichung |
|---|---|---|---|
| EP 3388479 A1 | 17-10-2018 | AU 2018202018 A1 | 25-10-2018 |
| | | CA 3000675 A1 | 10-10-2018 |
| | | CN 108690356 A | 23-10-2018 |
| | | EP 3388479 A1 | 17-10-2018 |
| | | EP 3388480 A1 | 17-10-2018 |
| | | JP 2018177783 A | 15-11-2018 |
| | | KR 20180114516 A | 18-10-2018 |
| | | US 2018291156 A1 | 11-10-2018 |
| EP 0771810 A1 | 07-05-1997 | DE 19540861 A1 | 07-05-1997 |
| | | EP 0771810 A1 | 07-05-1997 |
| | | JP H09188687 A | 22-07-1997 |
| | | US 5728746 A | 17-03-1998 |
| WO 2007118089 A1 | 18-10-2007 | BR PI0710718 A2 | 31-01-2012 |
| | | CA 2648749 A1 | 18-10-2007 |
| | | CN 101415761 A | 22-04-2009 |
| | | EP 2001947 A1 | 17-12-2008 |
| | | JP 2009532575 A | 10-09-2009 |
| | | KR 20090004917 A | 12-01-2009 |
| | | TW 200745235 A | 16-12-2007 |
| | | US 2009143494 A1 | 04-06-2009 |
| | | WO 2007118089 A1 | 18-10-2007 |
| US 7772303 B2 | 10-08-2010 | CN 101210096 A | 02-07-2008 |
| | | KR 100778006 B1 | 28-11-2007 |
| | | US 2008157038 A1 | 03-07-2008 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2002079315 A1
- EP 2687534 A1
- EP 3388479 A
- US 7288577 B1
- EP 2848640 A1
- EP 2687534 A
- DE OS1694142 A
- DE OS1694215 A
- DE OS1720768 A
- DE OS2832253 A
- DE OS2732292 A
- US 2764565 A
- GB PS1162517 A
- DE OS2153086 A


### In der Beschreibung aufgeführte Nicht-Patentliteratur


- Polyurethane. Kunststoff-Handbuch. Carl-Hanser-Verlag, 1993, vol. VII
- Polyurethanes. **NORBERT ADAM ; GEZA AVAR ; HERBERT BLANKENHEIM ; WOLFGANG FRIEDERICHS ; MANFRED GIERSIG ; ECKEHARD WEIGAND ; MICHAEL HALFMANN ; FRIEDRICH-WILHELM WITTBECKER ; DONALD-RICHARD LARIMER ; UDO MAIER.** Ullmann's Encyclopedia of Industrial Chemistry Release 2005, Electronic Release. Wiley-VCH, 2005
- **W. SIEFKEN.** *Justus Liebigs Annalen der Chemie,* vol. 562, 75-136
- Kunststoff-Handbuch. Carl-Hanser-Verlag, 1993, vol. VII, 104-123
- Polyurethane. Kunststoff-Handbuch. Carl-Hanser-Verlag, 1993, vol. VII, 139-192